# EUROPEAN PATENT SPECIFICATION

(11) **EP 3 120 041 B1**
(45) Date of publication and mention of the grant of the patent: **06.01.2021**
(21) Application number: 15764553.2
(22) Date of filing: 20.03.2015
(51) Int. Cl.: F16G 11/05, H02G 1/04, H02G 15/24, F16G 11/02

(54) **FLEXIBLE ELECTRICAL ISOLATION DEVICE**
FLEXIBLE VORRICHTUNG ZUR ELEKTRISCHEN ISOLIERUNG
DISPOSITIF D'ISOLATION ÉLECTRIQUE FLEXIBLE

(30) Priority: 21.03.2014 US 201461968543 P; 27.02.2015 US 201514633749
(43) Date of publication of application: 25.01.2017
(73) Proprietor: Quanta Associates, L.P., Houston, TX 77056 (US)
(72) Inventor: WABNEGGER, David, Karl, Langley, BC V4W 3Z4 (CA); PALMER, Robert, Wayne, Houston, TX 77056 (US); GREER, Jody, Milton, Houston, TX 77056 (US); BOUDREAU, Michael, Howard, Salmon Arm, BC V1E 2S5 (CA)
(74) Representative: Williams Powell
(86) International application number: PCT/US2015/021876
(87) International publication number: WO 2015/143402

(56) References cited:
- CN-A- 103 594 977
- CN-Y- 2 909 644
- GB-A- 2 096 836
- JP-A- H11 185 555
- JP-A- S58 136 209
- JP-U- S57 133 216
- US-A- 2 509 100
- US-A- 3 858 848
- US-A- 4 635 989
- US-A- 5 013 125
- US-B1- 6 253 627

## Description

### TECHNICAL FIELD:

This disclosure generally relates to a flexible electrical isolation device, one example of which is for use in replacing energized power lines or in stringing replacement optical ground wire or static wire above energized power lines.

### BACKGROUND:

There are many examples, some of which are provided herein, where the applicant believes it to be beneficial to provide a tensile load bearing, electrically insulating, flexible isolation member which is weather resistant and which advantageously may also provide for rotation in the form of swivelling or other relative motion along the length of the flexible member so as to relieve torsional loads and/or shearing loads. One example, already mentioned, is for use in replacing, or what applicant refers to as reconductoring or restringing of power line conductors or static wires respectively. Other examples may include the use of the flexible isolation member in a sling line under a helicopter, for example when used to suspend a lineman from the helicopter for power line maintenance work.

As will be commonly known, overhead power lines use one or more phases of conductors to transmit electricity within a transmission grid. The overhead power lines may be used for bulk transmission from a power plant to centers of high demand and for distribution within the centers of high demand. The conductors are often supported above the ground by support structures. Over time the energized transmission lines, referred to herein as energized conductors, may be exposed to harsh weather conditions, or become overloaded. Deteriorated or overloaded conductors must be replaced in that general process previously referred to as reconductoring. Static wires may be strung above the conductors to shield the energized conductors from lightning strikes. Occasionally the static wires, which may be conventional static wires or otherwise may be referred to as overhead ground wire, shield wire, earth wire, etc., or which may be optical ground wire (OPGW), collectively referred to herein as static wire, must also be replaced in a process referred to as restringing. During the reconductoring or restringing process it is often advantageous to use pulling wire instead of pulling rope which may melt, break or otherwise fail if moist or dirty when exposed to a high voltage environment. A high voltage environment occurs when pulling conductors or static wire because each may be subjected to a significant induced voltage due to proximity to one or more high voltage energized conductors, for example carrying 69kV or more. Thus it is useful to use a pulling wire instead of a pulling rope. The use of pulling wire necessitates the use of a flexible electrically isolating link between the pulling wire and the conductor or static wire that is to be replaced. JPH11185555 discloses a flexible insulator. JPS57133216U discloses an insulated rod. CN2909644Y discloses an insulating rod adapter assembly. JPS58136209 discloses a method of tightening transmission wire. CN103594977 discloses flexible busbar erecting installation technology. GB2096836 discloses synthetic rope guy means.

### SUMMARY:

The present invention thus includes or comprises, as those terms are used interchangeably herein, a flexible, insulated, isolation link, member or device, again as those terms are used interchangeably herein, to separate and electrically isolate, in one example the old, to-be-replaced, existing conductor or static wire from the pulling wire or wire rope, so as to eliminate the circulating current between the old conductor or static wire and the wire rope.

According to an aspect of the present invention, there is provided an electrical isolator as claimed in claim 1 .

According to another aspect of the present invention, there is provided a method as claimed in claim 21.

Coupling members may be anchored to ends of the dielectric member of the isolator by anchor elements. The anchor elements may include at least one spelter. Each a coupling member may include at least one female spelter coupling mated with a spelter.

The anchor element may include an elongate shaft member which is inserted into and aligned along the length of a corresponding end of the dielectric member when the coupling members are mounted to the ends of the dielectric member.

The at least one spelter may include first and second spelters joined end-to-end, or mounted on a shaft member extending between the spelters, or otherwise located near or adjacent to one another when mounted in the ends of the dielectric member.

In the embodiment where the spelters are mounted on a shaft member, the shaft member has opposite first and second ends, and the first spelter is mounted on the first end. The female spelter coupling mates onto the first spelter. The shaft member is inserted into the corresponding end of the dielectric member so that the second end of the shaft member is inserted first into the end of the dielectric member and so that the first end of the shaft member is, once inserted into the dielectric member, adjacent a terminal end face of the corresponding end of the dielectric member so that the corresponding end of the dielectric member is sandwiched between the first spelter and the female spelter coupling to clamp the corresponding end of the dielectric therebetween. The second spelter may be mounted or formed on the second end of the shaft member.

The female spelter coupling may include a female mating collar extending therefrom. The collar is sized to snugly fit around the membrane. The collar may be positioned relative to the second spelter when the first spelter is the mated in the female spelter coupling so that the female mating collar surrounds the second spelter, wherein the dielectric member is sandwiched between the second spelter and the female mating collar and a seal is formed between the membrane and the female mating collar.

The dielectric member may advantageously be a dielectric synthetic rope, for example, made from strands chosen from the group comprising: aramid, polyester, polyethylene, nylon ™, to name examples which are not intended to be limiting, or hybrids thereof, collectively referred to herein as synthetic rope.

The female spelter coupling has a cavity. The first spelter mates within the cavity. The cavity may be filled with a fluid -to-sol id setting compound so as to fix the first spelter within the cavity. The setting compound may be a two part resin.

The membrane may be at least partly translucent so that the condition of the fluid therein may be inspected from the exterior of the membrane. The membrane may be a reinforced tube. The fluid may be oil, for example having a viscosity of substantially 0.5 centi-stokes.

A pressure equalizing tube may be nested within the membrane or tube and extending substantially from the first end to the second end of the membrane or tube so as to provide fluid communication of the fluid between the first and second ends of the membrane or tube. The dielectric member may have a core. The pressure equalizing tube may run along the core. The dielectric member may advantageously substantially fill the membrane or tube.

The electrical isolator may be an isolation link electrically isolating power line conductor or static wire from a pulling line. A method is provided that couples the isolator between the conductor or static wire and the pulling line. The method and apparatus also applies to other applications such as helicopter sling lines, etc.

### BRIEF DESCRIPTION OF DRAWINGS:

Various examples of the apparatus are described in detail below, with reference to the accompanying drawings. The drawings may not be to scale and some features or elements of the depicted examples may purposely be embellished, or portions removed, for clarity. Similar reference numbers within the drawings refer to similar or identical elements. The drawings are provided only as examples and, therefore, the drawings should be considered illustrative of the present invention and its various aspects, embodiments and options. The drawings should not be considered limiting or restrictive as to the scope of the invention.
Figure 1 is a side elevation view of one end of an example of a flexible, electrically insulated, isolation link.
Figure 1A is an enlarged, partially cutaway, view of a portion of Figure 1.
Figure 2 is a partially exploded view of the portion of the isolation link of Figure 1.
Figure 3 is a side elevation view showing an isolation link passing through a dolly during pulling.
Figure 4 is an assembled spelter lock as shown used in the spelter socket in the coupling of Figure 1A.
Figure 5 is, in perspective view, an alternative embodiment of an isolation link according to a further aspect of the invention.
Figure 6 is an enlarged view of a portion of Figure 5.
Figure 7 is an enlarged, partially cut-away view of Figure 6 showing the swivel, ball joint and part of the spelter coupling removed.
Figure 8 is a view of the primary and secondary spelters of Figure 7.

### DETAILED DESCRIPTION:

Isolation link 100 is a flexible, weather resistant and preferably weather-proof, electrical insulator having the properties that it not only does not conduct electric current, through its length, but also will carry a tensile loading and also preferably allow for swivelling, rotation, or other relative movement along the link of at least one portion of the link relative to another to relieve torque loading on or at the end of the link due to any torque applied to the link from for example a pulling wire or a pulling rope. For example, the isolation link 100 may be a length of tensile and dielectrically tested insulated rope with dielectric properties, preferably protected or shielded from the weather or other adverse elements that may compromise its dielectric properties. The protection or shielding preferably will protect the entire length of insulated rope. Although during reconductoring or restringing a pulling rope may be employed in good weather instead of a pulling wire, it is in applicant's opinion prudent to use an isolation link in those situations also, in case of inadvertent deterioration of the rope's dielectric properties due to moisture, contamination, etc. Applicant has found that high voltage levels in the energized conductors, which have been found to induce a voltage and current in non-energized conductors or static wires, when combined with the adverse effect on the dielectric properties of a pulling rope due to moisture and/or dirt, etc. in or on the pulling rope, may cause the pulling rope to melt and break or otherwise fail. The isolation link 100 electrically isolates between a pulling wire and the associated workers and the stringing equipment and the to-be-replaced conductor or static wire 20 as the pulling wire is strung through the power line system

One example of an isolation link 100 proposed by the applicant uses a length of dielectric rope which is encased in a flexible, dielectric membrane. The membrane is filled with dielectric oil or other inert dielectric fluid, such as a dielectric liquid or gel, so as to soak, completely bath or surround, or impregnate the dielectric rope and exclude air in the interstices between the fibres of the dielectric rope and in any voids between the rope and the flexible, dielectric membrane. In one embodiment, each end of the isolation link, its length depending on the required electrical insulation as would be known to one skilled in the art, is sealed to maintain the oil or other dielectric in the membrane and in the rope. The ends are mounted in a terminating device to a joint such as a ball joint and/or swivel joint, etc., so as to relieve a torsional force applied to the link and allow relative motion between the end of the sealed membrane/rope combination and for example the end of the pulling wire, or end of the conductor or static wire, or end of the sling rope, as the case may be. A description of the isolation link is provided in applicant's patent application publication number US 2015-0270035 A1 and in applicant's patent application publication no. US 2015-0249325 A1.

One skilled in the art will appreciate that the isolation link 100 provides an electrically insulated connection between the old conductor or static wire (to be replaced) and the pulling wire that breaks an electrical circuit, such as a ground circulating current, that can circulate through the earth and along the old conductor static wire and pulling wire. Typical lengths for isolation link 100 may be 1 -2 feet for low voltage reconductoring (e.g. less than 25kV), or in the order of 8-20 feet for high voltage transmission reconductoring (e.g. greater than 345kV), 50-250 feet for slinging a lineman under a helicopter.

In the instance of a replacement wire being pulled into an occupied wire position, the existing wire in the occupied wire position is utilized as a pulling line by positioning it in dollies or travelers, connecting it to the new wire and pulling the existing wire utilizing for example a v-groove or bullwheel puller. All pulling and tensioning equipment and conductor materials are situated upon equal potential zones (EPZ's) at each end of the pull. A running ground is placed upon the pulling line at the wire puller end and another running ground is placed on the new wire at the tensioning end (payout). Close proximity stringing is executed in the same manner, with the exception that the circuit, static, or OPGW (collectively herein static wire) being replaced is de-energized, but is co-located with an energized circuit.

Although the wire being installed is not directly energized, such as by a utility company in the normal course of supplying electricity, the close proximity of the energized phases creates an energized environment which imparts an induced voltage and current onto the pulling line and on the new wire. The running grounds are used in order to protect the equipment and the workers who are required to be in close proximity to the wires. However, multiple ground potential points combined with the induced voltage and current create a ground circulating current with unknown and unpredictable electrical forces. A single point ground will greatly reduce this effect, but would leave one end of the entire pull operation, or simply the pull unprotected.

As stated above, use of di-electric tested rope installed between the pulling line and the new wire can be used to isolate the grounds, however the rope itself poses a safety hazard due to the potential for the rope to become contaminated by airborne particles, high humidity, or precipitation rendering the rope conductive thereby eliminating the isolation between the pulling line and the new wire required.

The isolating insulator link or isolation link 100 may be characterized in one aspect as including a flexible elongated tensionally-strong insulator such as a membrane-encased dielectric flexible member having terminating couplings mounted at either end. The couplings provide for relative torsion relief and relative bending moment relief between, respectively, for example the pulling line at one end of the isolation link and the new wire at the other end of the isolation link. In one embodiment the couplings at either end of the elongated isolating insulator link each include a first joint allowing relative bi-directional movement between two portions, for example two halves, of the coupling. A second joint may be provided allowing relative rotation or swivelling about a longitudinal axis of the coupling.

The first joint may for example be a universal joint, or a ball joint, or a tensionally strong flexible stem encased within the coupling. The second joint may for example be a swivel. A single joint may be provided to replace the function of both the first and second joints.

As stated above, one example of the flexible member in isolation link 100 proposed by the applicant uses a length of dielectric rope which is encased in a flexible membrane, hose or tube (collectively herein a flexible membrane), wherein the flexible membrane is filled with dielectric oil so as to impregnate the dielectric rope and exclude air in the interstices between the fibres of the rope and in any voids between the rope and the walls of the membrane. In one embodiment, each end of the isolation link, its length depending on the required insulation between the pulling wire and the conductor or static wire as would be known to one skilled in the art, is sealed to maintain the oil in the membrane and rope, and mounted in a terminating device to a joint or joints such as described above so as to resist a tensile force applied to the isolation link and allow relative motion between the end of the flexible member and the end of the pulling wire or end of the static wire as the case may be.

Thus, as will now be understood, elimination of the circulating current while providing electrical protection on both ends of the pull may be accomplished by electrically isolating the pulling line or pulling wire from the new wire using such an isolating link. This allows the installation of running grounds on both ends of the pull without creating a circulating current.

The flexible member is flexible or bendable or otherwise non-resiliently deformable while resisting lengthening due to tensile loading (herein collectively referred to as flexible) to accommodate for example the bending radius of a traveler or dolly (as those terms are used interchangeably herein) and in one basic example is composed of a flexible high tensile strength, di-electric material with attachment joints or couplings on each end. The attachment joints or couplings of the isolating link, mounted at either end of the flexible member, are constructed in such a manner as to, in a preferred embodiment not intended to be limiting, control both rotation imparted by the cables and bi-directional shear induced when the connection or attachment points pass through the dollies. The isolating link, when properly maintained, is advantageously impervious to moisture, dirt, and airborne particles including dust, thereby mitigating the potential for the device, and in particular the flexible member becoming conductive during use. A reinforced composite polymer or aramid, or combination of those or other synthetic rope fibres, for example in the form of a composite braided rope are examples of flexible material which may be used in the flexible member. The flexible membrane encasing the flexible member may for example be clear or transparent for ease of inspection for the presence of air in the tube or for the state of the rope, or may be partly clear (for example if the membrane is a tube having an inspection window strip along its length) or translucent. The tube may also for example be reinforced as for example found in conventional insulated hydraulic hoses.

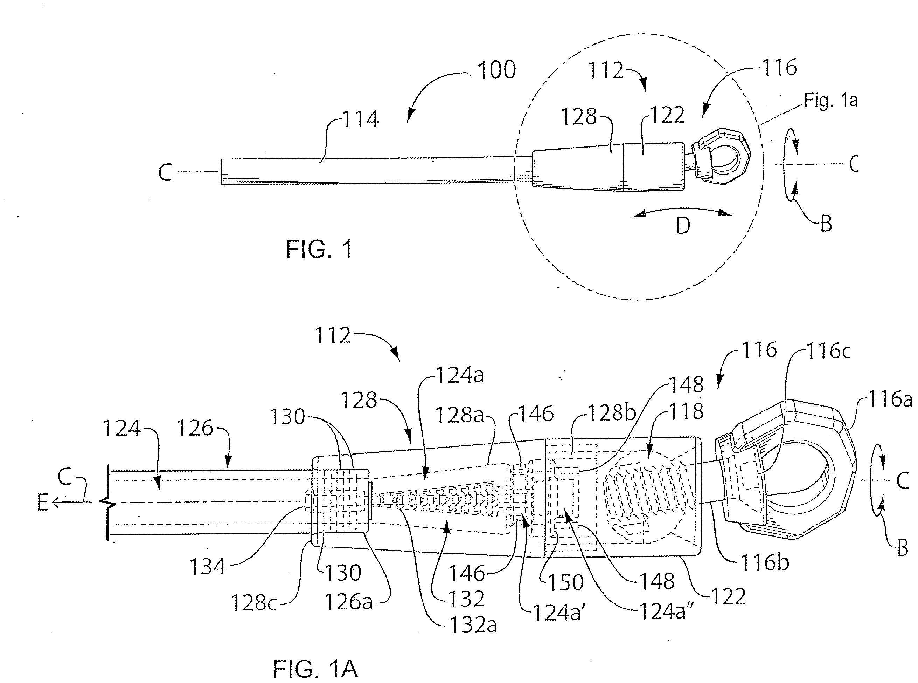

Thus as seen by way of example in Figures 1-4 , isolation link 100 includes attachment couplings 112 at either end of a length of a flexible member such as flexible dielectric insulator 114. The couplings themselves are not, at least need not be, constructed of dielectric material and may for example be made of stainless steel. The elongate dielectric flexible insulator 114 is of sufficient length to provide electrical isolation for the rated system voltage to which dielectric flexible insulator 114 will be exposed without the need for the connection joints or couplings 112 to be di-electric. In the instance, without intending to be limiting, of the isolation link 100 being used in a wire replacement procedure, couplings 112 attach the flexible insulator 114 to the pulling wire 104 at a first coupling 112, and to the new wire 106 at a second coupling 112, where the first and second couplings 112 are at opposite ends of isolation link 100.

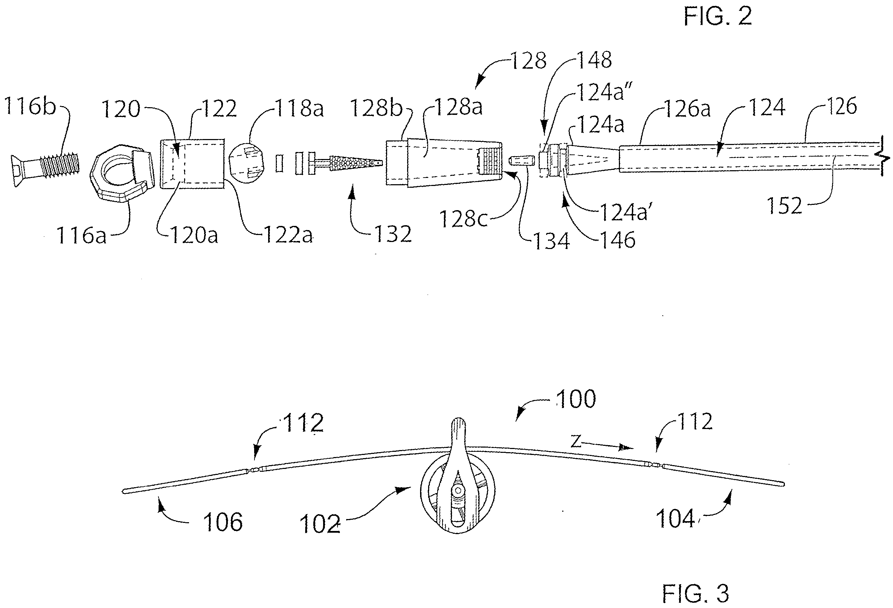

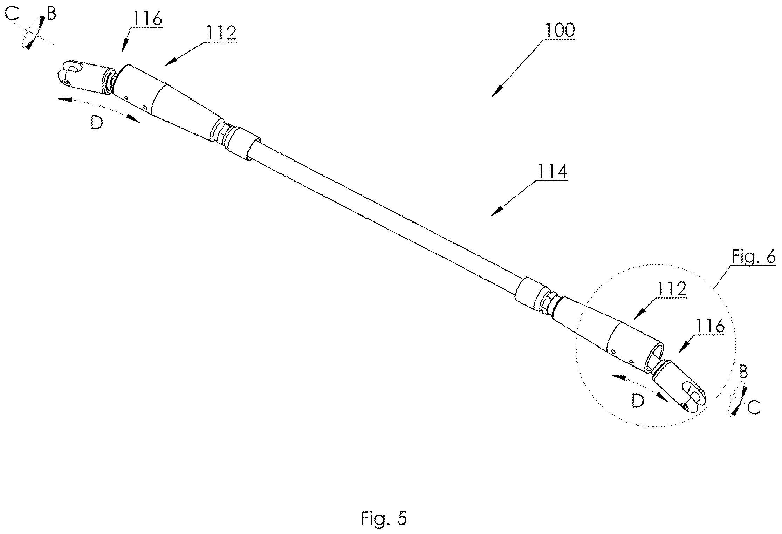

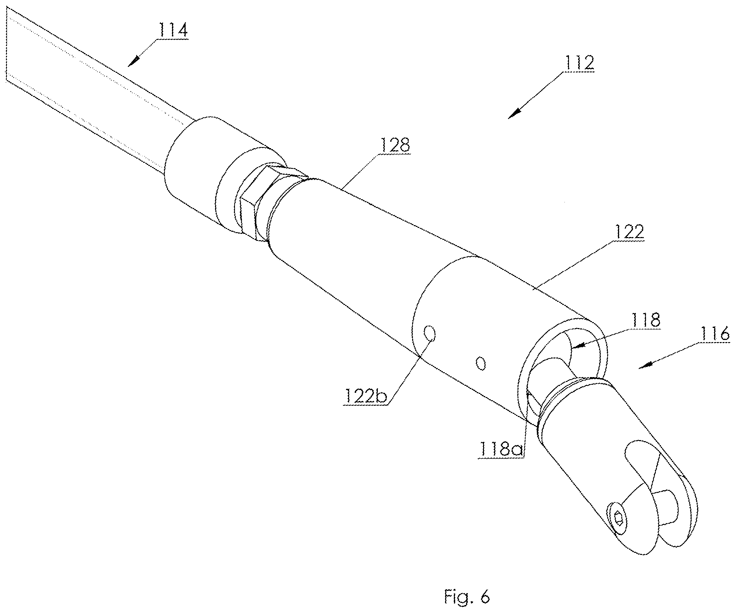

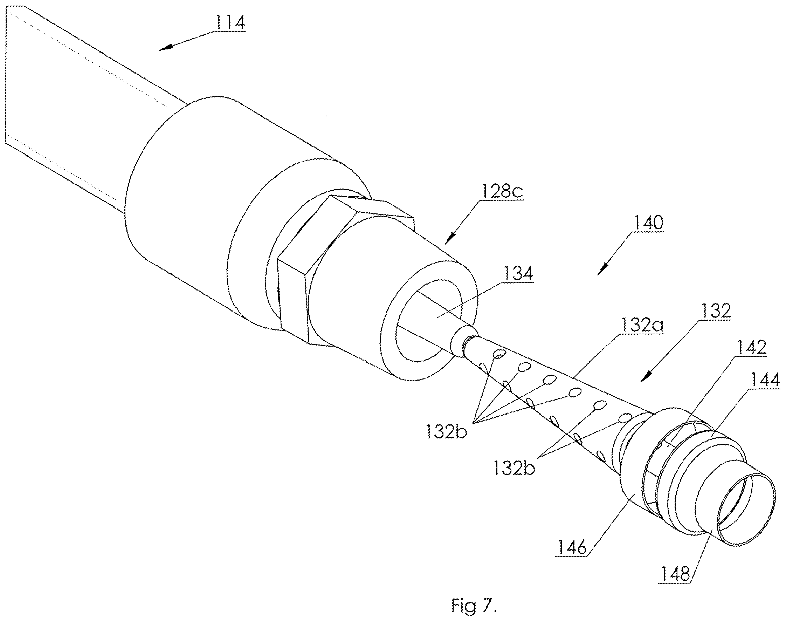

One of the couplings 112 is seen enlarged in Figure 1A. One of the couplings 112 is seen in partially exploded view in Figure 2. Although not intending to be limiting, in those embodiments, torsion resulting in relative rotation in direction B about longitudinal axis C between flexible insulator 114 and any line attached thereto, or any wire attached thereto such as either the pulling wire 104 or the new conductor or static wire 106, is relieved by a swivel joint within bi-directional joint 116. Swivel couplings which may be employed are known to those skilled in the art but may for example include eye 116a rotatably mounted onto the end of shank 116b by means of swivel mount 116c. Swivel couplings may for example also be those of the type, such as the LH104 ™ swivel, sold by Morpac Industries ™ of Pacific, Washington, USA, as generally represented in Figures 5-8. As would be known to one skilled in the art, such swivel couplings may employ internal bearings, preferably sealed or somewhat sealed to inhibit the intrusion or effect of harsh environmental elements or factors such as moisture, grit, cold/heat, etc. Although not shown it is understood that the use of swivels would advantageously also include the use of such bearings so that swivelling rotation in direction B is not left solely to rotation in direction B of ball 118a within its socket.

Bi-directional joint 116 is bi-directional in the sense that it allows for both rotation in direction B about axis C, but also rotation in direction D, the latter provided for example by ball joint 118 in joint 116 so as to accommodate the relative bi-directional movement caused by shear and bending as the coupling 112 passes, as for example in direction Z, through and over a dolly 102 as seen in Figure 3. In the illustrated example, ball 118a is threadably mounted onto shank 116b. Ball 118a is mounted for rotation within ball socket 120 formed within socket housing 122. In particular, ball 118a rests against shoulder 120a in socket 120. Bi-directional joint 116 may be of various designs as would be known to one skilled in the art. For example, and without intending to be limiting, bi-directional joint 116 may be a form of universal joint, or such as the illustrated ball-joint and swivel combination, or may include an encased narrow, flexible stem (not shown) having sufficient tensile strength and which coupling joins one part of coupling 112 to the other part of coupling 112.

As described above, flexible member 114 in one embodiment includes a synthetic rope encased in a tube and mounted at each end thereof to a corresponding coupling 112. Thus as seen in Figures 1A and 2, rope 124 is snugly shrouded in flexible tubing 126. Tubing 126 is shorter than the length of the end of the rope 124 so as to expose the end 124a from the end of the tube. Spelter socket 128 is hollow along axis C and provides a frusto-conical wedging cavity 128a between the threaded male end 128b and the oppositely disposed female end 128c. Male end 128b threadably engages with the threaded female end 122a of socket housing 122. Female end 128c engages with the end 126a of tube 126. In this embodiment, which is not intended to be limiting, a tension load on flexible member 114 in direction E, i.e., along axis C, is to be taken up by rope 124 acting on spelter socket 128, and not to an appreciable degree by tube 126. Tubing 126 may be mounted into spelter socket 128, and specifically into female end 128c, in a snug friction fit sealed by seals 130. Seals 130 may for example be o-rings or such other seals as would be known to one skilled in the art, to create and maintain a fluidic seal between end 126a of tubing 126 and the interior annular surface of female end 128c.

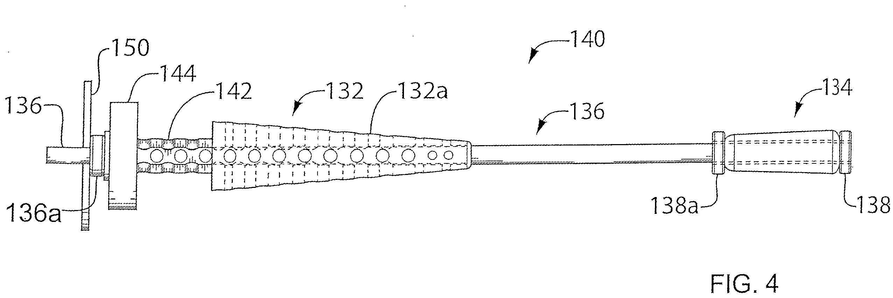

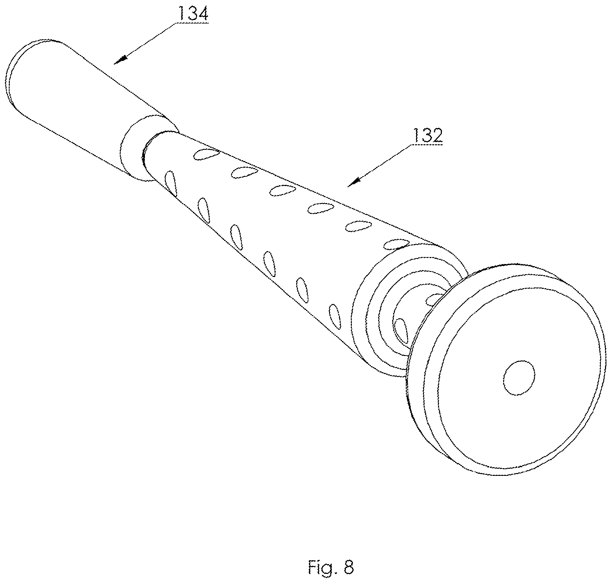

The end 124a of rope 124 is flared radially outwardly relative to axis C as a result of, and so as to accommodate, the insertion of a conical first or primary spelter plug 132 best seen in Figures 4 and 8, along the core of the rope 124. The primary spelter plug 132 is provided to assist in anchoring the end 124a of rope 124 into the spelter socket 128. The spelter plugs are also referred to herein as spelters. In the illustrated embodiment, which is not intended to be limiting, a second or secondary spelter plug 134, which may have a small reverse taper relative to the taper on the primary spelter plug, is also provided to also assist in anchoring the end 124a of rope 124 into the spelter socket 128 and to assist in maintaining the seating of the seals 130 when the rope is under tensile loading. Spelter plug 134 may be rigidly mounted to or otherwise near or adjacent spelter plug 132. The mounting may be for example by means of a rod 136, seen in Figure 4, although it is to be understood that the use of such a rod is not required. The ends of rod 136 may be threaded, and the spelter plugs 132, 134 hollow so as to accommodate rod 136 journalled through the lengths of the spelter plugs and the spelter plugs anchored onto the rod by nuts 138. A positioning nut 138a may be used to hold spelter plug 134 in a desired position along rod 136.

Primary spelter plug 132 has a tapered or conically wedge-shaped surface 132a which is sized so as to evenly sandwich, i.e., to substantially evenly distribute a pressure loading to, end 124a of rope 124 between the surface of cavity 128a and the surface 132a of primary spelter plug 132 when tension is applied to rope 124 in direction E. The taper of plug 132 is inclined relative to axis C at, for example, the same angle relative to axis C as the surface of frusto-conical cavity 128b in spelter socket 128, although this is not intended to be limiting. Secondary spelter plug 134 is advantageously positioned along rod 136 so that once spelter lock 140 (in this embodiment spelters 132, 134 and rod 136) is pushed into and along the centroidal core of the end 124a of rope 124, and the spelter lock 140 and the end of rope 124 slid into the spelter socket 128, not only is the end 124a of the rope 124 flared over the primary spelter 132, but the portion of the rope covering the secondary spelter 134 is radially outwardly compressed. Thus, just as the primary spelter compresses the end of the rope 124 against the frusto-conical cavity 128a, the secondary spelter compresses against the interior surface of female end 128c (herein also referred to as a female mating collar of the spelter socket or coupling) the portion of the rope 124 and tube 126 sandwiched between the secondary spelter 134 and the interior surface of female end 128c of spelter socket 128. This radially outward compression of the rope and tube in the female mating collar, end 128c, of the spelter socket may assist in holding the fluidic sealing of seals 130 when rope 124 in under tension in direction E and when thus the rope may be of reduced diameter. Such a radially outward compression also may increase the frictional engagement of the secondary spelter in the rope 124 to assist in holding the rope in the spelter socket 128. The secondary spelter 134 may, in alternative embodiments, be replaced with a hydraulic hose fitting threaded or otherwise incorporated into end 128c of spelter socket 128.

The spelter lock 140 also may include a neck 142 and an annular locking flange 144. Neck 142 is of reduced radial diameter relative to the radial diameters of the widest end of primary spelter 132 and relative to the diameter of locking flange 144. The length of neck 142 is such that a first di-electric clamp 146 (shown in dotted outline in Figure 2), such as a di-electric hose clamp (one example of which being a plastic strap), may be used to pinch or compress a corresponding annular portion 124a' of end 124a of rope 124 into the annular channel formed around neck 142 between primary spelter 132 and locking flange 144. This locks the end of the rope onto the spelter lock 140. A second di-electric clamp 148 (also shown in dotted outline) may be used to further lock a second rope portion 124a" of the rope end 124a onto the spelter lock by clamping the rope portion 124a" down onto the end of the rod 136 on the opposite side of locking flange 144 from neck 142.

In embodiments employing a rod 136, because rod 136 may be metallic, as may be the primary and/or secondary spelters 132,134, and indeed all of spelter lock 140, an electrically conductive connection should be provided, such as a spider or star washer 150 seen in Figure 4, between rod 136 and the interior surface of spelter socket 128 adjacent surface 128a. Spider or star washer 150 may be separated from locking flange 144 by washer or spacer 136a. One or more set screws 122b may advantageously be provided, acting for example between housing 122 and the male end 128b of spelter socket 128, to resist inadvertent unscrewing of the housing 122 from the spelter socket 128.

A dielectric fluid, for example a dielectric fluid such as oil (e.g., viscosity of about 0.5 centi-Stoke) or a viscous inert fluid or gel such as fluidic silicone, or other dielectric fluids as would be known to one skilled in the art, is impregnated into rope 124 and filled into the interstices between rope 124 and tube 126 so as not to leave any air bubbles or air pockets. The dielectric fluid fills the tube and completely impregnates between the fibres of the rope along the entire length of the rope and tube extending between and into the couplings 112. To stop the dielectric fluid from escaping from within cavity 128a and past the clamps 146, 148, which themselves will act as seals inhibiting the movement of the dielectric fluid along the rope fibres so as to leak into the cavity of housing 122, a further seal (not shown) may be provided. One example of such a further seal, and without intending to be limiting, is to fill the cavity in the spelter socket with epoxy resin while the resin is in its fluid state, and let the epoxy harden while completely filling any voids in the spelter socket cavity and for example anchoring the spelter 132 by the incursion of the resin into the spelter via apertures 132b.

In one embodiment, hollow flexible spinal member 152 seen in dotted outline in Figure 2, which may be a narrow diameter flexible tube, is inserted along the length of the core of rope 124. The function of the spinal member 152 is to recirculate the dielectric fluid from one end of the flexible member 114 to the other end of flexible member 114 when the dielectric fluid becomes pressurized at one end as for example when the link 100 passes over a dolly 102.

While the above disclosure describes certain examples of the present invention, various modifications to the described examples will also be apparent to those skilled in the art. The scope of the claims should not be limited by the examples provided above; rather, the scope of the claims should be given the broadest interpretation that is consistent with the disclosure as a whole.

## Claims

1. An electrical isolator (100) comprising:
an elongate dielectric flexible member (114,124) **characterized in that** the elongate dielectric flexible member (114,124) is encased in a corresponding length of a dielectric flexible membrane (126) so as to define voids there-between, and the membrane (126) is filled with dielectric fluid so as to fill the voids, wherein the opposite ends of the membrane (126) and member (114,124) are sealed to provide a fluid seal.

2. The isolator of claim 1, wherein the flexible member (114, 124) comprises a dielectric rope.

3. The isolator of claim 1 or 2 wherein the flexible member (114,124) is inelastic.

4. The isolator of claim 2 or 3 wherein the opposite ends of the membrane (126) and member (114,124) are sealed by corresponding couplers (112) and wherein the couplers (112) are adapted so that a tensile load applied to the couplers (112) tensions the member (114,124) with substantially the entire tensile load without substantially tensioning the membrane (126) with the tensile load.

5. The isolator of claim 4 wherein the flexible member (114,124) includes a body having a plurality of strands extending between the opposite ends of the flexible member (114,124), and wherein the membrane (126) is electrically insulating tubing (126) having first and second opposite ends, and having an interior surface defining a cavity extending between the opposite ends of the tubing (126), and wherein the tubing (126) is mounted to the flexible member (114,124) so as to substantially enclose the body of the flexible member (114,124),
and wherein the couplers (112) include first and second seal assemblies (130) mounted to the tubing (126) so as to fluidically seal each end of the opposite ends of the tubing (126),
and wherein the dielectric fluid fills the cavity so as to occupy the voids formed in the cavity between the interior surface of the tubing (126) and the body of the flexible member (114,124) and between the plurality of strands of the flexible member (114,124).

6. The isolator of claim 5 wherein the opposite ends of the flexible member (114,124) protrude from the corresponding opposite ends of the tubing (126).

7. The isolator of claim 4 wherein each coupler (112) includes a socket (128) having a narrow end, a wide end and a frustoconical bore (128a) extending through and between the narrow and wide ends, and wherein one end (124a) of the flexible member (114,124) is positioned in the bore (128a) so as to extend through at least the narrow end (128c) of the socket (128),
and wherein the bore (128a) of each coupler (112) is filled with a fluid-to solid setting compound so as to encase and retain the corresponding end (124a) of the flexible member (114,124) in the bore (128a).

8. The isolator of claim 1 wherein the dielectric member (114, 124) is inelastic and has first and second opposite ends,
and wherein the membrane is a tubing having first and second opposite ends, and wherein the dielectric member (114, 124) is journaled in the tubing (126) so as to extend from the first end of the tubing (126) to the second end of the tubing (126),
and wherein first and second coupling members (112) are mounted, respectively, to the first and second ends of the dielectric member (114, 124), and the first and second ends of the tubing (126) are mated in sealed engagement with the first and second coupling members (112) so that the first and second coupling members (112) fluidically seal the first and second ends of the tubing (126) and fluidically seal the dielectric member (114, 124) within the tubing (126),
and wherein the dielectric fluid fills the tubing (126) so as to displace any air in the tubing (126) and the dielectric member (114,124),
and wherein the first and second coupling members (112) are adapted to couple to objects at the opposite ends of the tubing (126).

9. The isolator of claim 8 wherein the first and second coupling members (112) are anchored, respectively, to the first and second ends of said dielectric member (114, 124), and wherein said first and second ends of the tubing (126) are mated in sealed engagement with said first and second coupling members (112) so that said first and second coupling members (112) fluidically seal said first and second ends of the tubing (126) and fluidically seal said dielectric member (114, 124) within the tubing (126),
and wherein said first and second coupling members (112) are adapted to releasably couple to a line (104, 106) chosen from a power line conductor (106), a static wire, a pulling line (104).

10. The isolator of claim 9 wherein each of said first and second coupling members (112) includes an anchor element (132, 134), and wherein one anchor element of said anchor elements (132, 134) is inserted into each of said first and second ends of said dielectric member (114, 124) so as to anchor therein said coupling members (112).

11. The isolator of claim 1 wherein said dielectric member (114, 124) is a synthetic rope which includes strands chosen from the group comprising: aramid, polyester, polyethylene, nylon(RTM).

12. The isolator of claim 11 wherein first and second coupling members (112) are mounted, respectively, to first and second ends of the dielectric member (114, 124), and wherein each coupling member (112) of said first and second coupling members has a cavity (128a), and wherein said member (114, 124) mates with said coupling member (112) within said cavity (128a), and wherein said cavity (128a) is filled with a fluid-to-solid setting compound so as to fix said member (114, 124) within said cavity (128a).

13. The isolator of claim 12 wherein said setting compound is a two-part resin.

14. The isolator of claim 1 wherein the membrane (126) is at least partly translucent so that a visual condition of said fluid may be inspected from the exterior of the membrane (126).

15. The isolator of claim 1 wherein said membrane (126) is reinforced.

16. The isolator of claim 1 wherein said fluid is dielectric oil.

17. The isolator of claim 16 wherein said oil has a viscosity of substantially 0.5 centi-stokes.

18. The isolator of claim 1 further comprising a pressure equalizing tube (152) nested within the membrane (126) and extending substantially from one of the opposite ends to the other of the opposite ends of the membrane (126) so as to provide fluid communication of the fluid between the opposite ends of the membrane (126).

19. The isolator of claim 18 wherein the dielectric member (114, 124) has a core, and wherein the pressure equalizing tube (152) runs along the core.

20. The isolator of claim 1 wherein the dielectric flexible member (114, 124) substantially fills the membrane (126).

21. A method for electrically isolating an energized power line conductor (106) or static wire (106) from a pulling line (104) **characterized by** using the electrical isolator (100) of claim 4 , wherein the couplers (112) at opposite ends of the membrane (126) and dielectric member (114, 124) are first and second couplers (112), the method comprising coupling the first coupler (112) to an end of the power line conductor (106) or static wire (106), and coupling the second coupler (112) to an end of the pulling line (104).

## Patentansprüche

1. Ein elektrischer Isolator (100) mit:
einem langgestreckten dielektrischen flexiblen Element (114, 124), **dadurch gekennzeichnet, dass** das langgestreckte dielektrische flexible Element (114, 124) in einer entsprechenden Länge einer dielektrischen flexiblen Membran (126) eingeschlossen ist, um so Hohlräume dazwischen zu definieren, und die Membran (126) mit dielektrischem Fluid gefüllt ist, um so die Hohlräume zu füllen, wobei die gegenüberliegenden Enden der Membran (126) und des Elements (114, 124) abgedichtet sind, um eine Fluiddichtung bereitzustellen.

2. Isolator nach Anspruch 1, wobei das flexible Element (114, 124) ein dielektrisches Seil umfasst.

3. Isolator nach Anspruch 1 oder 2, wobei das flexible Element (114, 124) unelastisch ist.

4. Isolator nach Anspruch 2 oder 3, wobei die entgegengesetzten Enden der Membran (126) und des Elements (114, 124) durch entsprechende Koppler (112) abgedichtet sind und wobei die Koppler (112) so eingerichtet sind, dass eine auf die Koppler (112) aufgebrachte Zuglast das Element (114, 124) mit im Wesentlichen der gesamten Zuglast unter Zugspannung setzt, ohne die Membran (126) mit der Zuglast im Wesentlichen unter Zugspannung zu setzen.

5. Isolator nach Anspruch 4, wobei das flexible Element (114, 124) einen Körper mit einer Vielzahl von Strängen umfasst, die sich zwischen den entgegengesetzten Enden des flexiblen Elements (114, 124) erstrecken, und wobei die Membran (126) ein elektrisch isolierender Schlauch (126) oder eine elektrisch isolierende Leitung ist, der oder die ein erstes und ein zweites entgegengesetztes Ende und eine Innenfläche aufweist, die einen Hohlraum definiert, der sich zwischen den entgegengesetzten Enden des Schlauchs (126) oder der Leitung erstreckt,
und wobei der Schlauch (126) oder die Leitung an dem flexiblen Element (114, 124) so angebracht ist, dass er oder sie den Körper des flexiblen Elements (114, 124) im Wesentlichen umschließt,
und wobei die Koppler (112) erste und zweite Dichtungsanordnungen (130) umfassen, die an dem Schlauch (126) oder der Leitung angebracht sind, um jedes Ende der gegenüberliegenden Enden des Schlauchs (126) oder der Leitung fluidisch abzudichten,
und wobei das dielektrische Fluid den Hohlraum so füllt, dass es die Hohlräume ausfüllt, die in dem Hohlraum zwischen der Innenfläche des Schlauchs (126) oder der Leitung und dem Körper des flexiblen Elements (114, 124) und zwischen der Vielzahl von Strängen des flexiblen Elements (114, 124) gebildet sind.

6. Isolator nach Anspruch 5, wobei die entgegengesetzten Enden des flexiblen Elements (114, 124) aus den entsprechenden entgegengesetzten Enden des Schlauchs (126) oder der Leitung hervorstehen.

7. Isolator nach Anspruch 4, wobei jeder Koppler (112) eine Muffe (128) mit einem schmalen Ende, einem breiten Ende und einer kegelstumpfförmigen Bohrung (128a) aufweist, die sich durch und zwischen den schmalen und den breiten Enden erstreckt, und wobei ein Ende (124a) des flexiblen Elements (114, 124) in der Bohrung (128a) so angeordnet ist, dass es sich zumindest durch das schmale Ende (128c) der Muffe (128) erstreckt,
und wobei die Bohrung (128a) jedes Kopplers (112) mit einer flüssig-zu-fest härtenden Masse gefüllt ist, um das entsprechende Ende (124a) des flexiblen Elements (114, 124) in der Bohrung (128a) zu umhüllen und zu halten.

8. Isolator nach Anspruch 1, wobei das dielektrische Element (114, 124) unelastisch ist und erste und zweite entgegengesetzte Enden aufweist,
und wobei die Membran ein Schlauch oder eine Leitung mit ersten und zweiten gegenüberliegenden Enden ist,
und wobei das dielektrische Element (114, 124) in dem Schlauch (126) oder der Leitung so gelagert ist, dass es sich von dem ersten Ende des Schlauchs (126) oder der Leitung zu dem zweiten Ende des Schlauchs (126) oder der Leitung erstreckt,
und wobei erste und zweite Koppelelemente (112) an ersten bzw. zweiten Enden des dielektrischen Elements (114, 124) montiert sind und die ersten und zweiten Enden des Schlauchs (126) oder der Leitung in abgedichtetem Eingriff mit den ersten und zweiten Koppelelementen (112) zusammengefügt sind, so dass die ersten und zweiten Koppelelemente (112) die ersten und zweiten Enden des Schlauchs (126) oder der Leitung fluidisch abdichten und das dielektrische Element (114, 124) innerhalb des Schlauchs (126) oder der Leitung fluidisch abdichten,
und wobei das dielektrische Fluid den Schlauch (126) oder die Leitung füllt, um jegliche Luft im Schlauch (126) oder der Leitung und in dem dielektrischen Element (114, 124) zu verdrängen,
und wobei die ersten und zweiten Koppelelemente (112) zur Kopplung an Objekte an den gegenüberliegenden Enden des Schlauchs (126) oder der Leitung eingerichtet sind.

9. Isolator nach Anspruch 8, wobei die ersten und zweiten Koppelelemente (112) an den ersten bzw. zweiten Enden des dielektrischen Elements (114, 124) verankert sind und wobei die ersten und zweiten Enden des Schlauchs (126) oder der Leitung in abgedichtetem Eingriff mit den ersten und zweiten Koppelelementen (112) zusammengefügt sind, so dass die ersten und zweiten Koppelelemente (112) die ersten und zweiten Enden des Schlauchs (126) oder der Leitung fluidisch abdichten und das dielektrische Element (114, 124) innerhalb des Schlauchs (126) oder der Leitung fluidisch abdichten,
und wobei die ersten und zweiten Koppelelemente (112) dazu ausgelegt sind, lösbar an eine Leitung (104, 106) zu koppeln, die ausgewählt ist aus einem Stromleitungsleiter (106), einem statischen Draht, einer Zugleitung (104).

10. Isolator nach Anspruch 9, wobei jedes der ersten und zweiten Koppelelemente (112) ein Ankerelement (132, 134) umfasst und wobei ein Ankerelement der Ankerelemente (132, 134) in jedes der ersten und zweiten Enden des dielektrischen Elements (114, 124) eingesetzt ist, um darin die Koppelelemente (112) zu verankern.

11. Isolator nach Anspruch 1, wobei das dielektrische Element (114, 124) ein synthetisches Seil ist, das Stränge enthält, die aus der Gruppe ausgewählt sind, umfassend: Aramid, Polyester, Polyethylen, Nylon (RTM).

12. Isolator nach Anspruch 11, wobei erste und zweite Koppelelemente (112) an ersten bzw. zweiten Enden des dielektrischen Elements (114, 124) montiert sind, und wobei jedes Koppelelement (112) der ersten und zweiten Koppelelemente einen Hohlraum (128a) aufweist, und wobei das Element (114, 124) mit dem Koppelelement (112) innerhalb des Hohlraums (128a) verbunden ist, und wobei der Hohlraum (128a) mit einer flüssig-zu-fest härtenden Verbindung gefüllt ist, um das Element (114, 124) innerhalb des Hohlraums (128a) zu fixieren.

13. Isolator nach Anspruch 12, wobei die aushärtende Masse ein zweiteiliges Harz ist.

14. Isolator nach Anspruch 1, wobei die Membran (126) zumindest teilweise translucent ist, so dass der visuelle Zustand des Fluids von der Außenseite der Membran (126) inspiziert werden kann.

15. Isolator nach Anspruch 1, wobei die Membran (126) verstärkt ist.

16. Isolator nach Anspruch 1, wobei das Fluid ein dielektrisches Öl ist.

17. Isolator nach Anspruch 16, wobei das Öl eine Viskosität von im Wesentlichen 0,5 Zentistokes hat.

18. Isolator nach Anspruch 1, ferner aufweisend ein Druckausgleichsrohr (152), das in die Membran (126) eingebettet oder mit dieser verschachtelt ist und sich im Wesentlichen von einem der entgegengesetzten Enden zum anderen der entgegengesetzten Enden der Membran (126) erstreckt, um so eine Fluidverbindung des Fluids zwischen den entgegengesetzten Enden der Membran (126) zu schaffen.

19. Isolator nach Anspruch 18, wobei das dielektrische Element (114, 124) einen Kern aufweist und wobei das Druckausgleichsrohr (152) entlang des Kerns verläuft.

20. Isolator nach Anspruch 1, wobei das dielektrische flexible Element (114, 124) die Membran (126) im Wesentlichen ausfüllt.

21. Verfahren zum elektrischen Isolieren eines unter Spannung stehenden Stromleitungsleiters (106) oder eines statischen Drahtes (106) von einer Zugleine (104), **gekennzeichnet durch** die Verwendung des elektrischen Isolators (100) nach Anspruch 4, wobei die Koppler (112) an gegenüberliegenden Enden der Membran (126) und eines dielektrischen Elements (114, 124) erste und zweite Koppler (112) sind, wobei das Verfahren ein Koppeln des ersten Kopplers (112) an ein Ende des Stromleitungsleiters (106) oder statischen Draht (106) und ein Koppeln des zweiten Kopplers (112) an ein Ende der Zugleine (104) umfasst.

## Revendications

1. Isolateur électrique (100) comprenant :
un élément flexible diélectrique allongé (114, 124) **caractérisé en ce que** l'élément flexible diélectrique allongé (114, 124) est encastré dans une longueur correspondante d'une membrane flexible diélectrique (126) de manière à définir des vides entre eux, et la membrane (126) est remplie de fluide diélectrique de manière à remplir les vides, dans lequel les extrémités opposées de la membrane (126) et de l'élément (114, 124) sont scellées pour fournir une étanchéité aux fluides.

2. Isolateur selon la revendication 1, dans lequel l'élément flexible (114, 124) comprend un cordage diélectrique.

3. Isolateur selon la revendication 1 ou 2, dans lequel l'élément flexible (114, 124) est inélastique.

4. Isolateur selon la revendication 2 ou 3, dans lequel les extrémités opposées de la membrane (126) et de l'élément (114,124) sont scellées par des coupleurs correspondants (112) et dans lequel les coupleurs (112) sont adaptés pour qu'une charge de traction appliquée aux coupleurs (112) tende l'élément (114, 124) avec pratiquement toute la charge de traction sans tendre sensiblement la membrane (126) avec la charge de traction.

5. Isolateur selon la revendication 4, dans lequel l'élément flexible (114,124) comprend un corps ayant une pluralité de brins s'étendant entre les extrémités opposées de l'élément flexible (114, 124), et dans lequel la membrane (126) est un tube électriquement isolant (126) ayant des première et deuxième extrémités opposées, et ayant une surface intérieure définissant une cavité s'étendant entre les extrémités opposées du tube (126),
et dans lequel le tube (126) est monté sur l'élément flexible (114, 124) de manière à enserrer sensiblement le corps de l'élément flexible (114, 124),
et dans lequel les coupleurs (112) comprennent des premier et deuxième ensembles d'étanchéité (130) montés sur le tube (126) de manière à sceller de manière fluidique chaque extrémité des extrémités opposées du tube (126),
et dans lequel le fluide diélectrique remplit la cavité de manière à occuper les vides formés dans la cavité entre la surface intérieure du tube (126) et le corps de l'élément flexible (114,124) et entre la pluralité de brins de l'élément flexible (114,124).

6. Isolateur selon la revendication 5, dans lequel les extrémités opposées de l'élément flexible (114, 124) font saillie à partir des extrémités opposées correspondantes du tube (126).

7. Isolateur selon la revendication 4, dans lequel chaque coupleur (112) comprend un embout (128) ayant une extrémité étroite, une extrémité large et un alésage tronconique (128a) s'étendant à travers et entre les extrémités étroites et larges, et dans lequel une extrémité (124a) de l'élément flexible (114, 124) est positionné dans l'alésage (128a) de manière à s'étendre à travers au moins l'extrémité étroite (128c) de l'embout (128),
et dans lequel l'alésage (128a) de chaque coupleur (112) est rempli d'un composé de prise fluide à solide de manière à enserrer et à retenir l'extrémité correspondante (124a) de l'élément flexible (114, 124) dans l'alésage (128a).

8. Isolateur selon la revendication 1, dans lequel l'élément diélectrique (114, 124) est inélastique et a des première et deuxième extrémités opposées,
et dans lequel la membrane est un tube ayant des première et deuxième extrémités opposées,
et dans lequel l'élément diélectrique (114, 124) est tourillonné dans le tube (126) de manière à s'étendre de la première extrémité du tube (126) à la deuxième extrémité du tube (126),
et dans lequel des premier et deuxième éléments de couplage (112) sont montés, respectivement, sur les première et deuxième extrémités de l'élément diélectrique (114, 124), et les première et deuxième extrémités du tube (126) sont appairées en engagement étanche avec les premier et deuxième éléments de couplage (112) de sorte que les premier et deuxième éléments de couplage (112) scellent de manière fluidique les première et deuxième extrémités du tube (126) et scellent fluidiquement l'élément diélectrique (114, 124) à l'intérieur du tube (126),
et dans lequel le fluide diélectrique remplit le tube (126) de manière à déplacer tout air dans le tube (126) et l'élément diélectrique (114, 124),
et dans lequel les premier et deuxième éléments de couplage (112) sont adaptés pour se coupler à des objets aux extrémités opposées du tube (126).

9. Isolateur selon la revendication 8, dans lequel les premier et deuxième éléments de couplage (112) sont ancrés, respectivement, aux première et deuxième extrémités dudit élément diélectrique (114, 124), et dans lequel lesdites première et deuxième extrémités du tube (126) sont appairées en engagement étanche avec lesdits premier et deuxième éléments de couplage (112) de sorte que lesdits premier et deuxième éléments de couplage (112) scellent fluidiquement lesdites première et deuxième extrémités du tube (126) et scellent fluidiquement ledit élément diélectrique (114, 124) à l'intérieur du tube (126),
et dans lequel lesdits premier et deuxième éléments de couplage (112) sont adaptés pour se coupler de manière amovible à une ligne (104, 106) choisie parmi un conducteur de ligne électrique (106), un fil statique, une ligne de traction (104).

10. Isolateur selon la revendication 9, dans lequel chacun desdits premier et deuxième éléments de couplage (112) comprend un élément d'ancrage (132, 134), et dans lequel un élément d'ancrage desdits éléments d'ancrage (132, 134) est inséré dans chacun desdits première et deuxième extrémités dudit élément diélectrique (114, 124) de manière à y ancrer lesdits éléments de couplage (112).

11. Isolateur selon la revendication 1, dans lequel ledit élément diélectrique (114, 124) est une corde synthétique qui comprend des brins choisis dans le groupe comprenant : aramide, polyester, polyéthylène, nylon (RTM).

12. Isolateur selon la revendication 11, dans lequel des premier et deuxième éléments de couplage (112) sont montés, respectivement, aux première et deuxième extrémités de l'élément diélectrique (114, 124), et dans lequel chaque élément de couplage (112) desdits premier et deuxième éléments de couplage a une cavité (128a), et dans lequel ledit élément (114, 124) s'appaire avec ledit élément de couplage (112) à l'intérieur de ladite cavité (128a), et dans lequel ladite cavité (128a) est remplie d'un composé de prise fluide à solide de manière à fixer ledit élément (114, 124) à l'intérieur de ladite cavité (128a).

13. Isolateur selon la revendication 12, dans lequel ledit composé de prise est une résine en deux parties.

14. Isolateur selon la revendication 1, dans lequel la membrane (126) est au moins partiellement translucide de sorte qu'une condition visuelle dudit fluide puisse être inspectée depuis l'extérieur de la membrane (126).

15. Isolateur selon la revendication 1, dans lequel ladite membrane (126) est renforcée.

16. Isolateur selon la revendication 1, dans lequel ledit fluide est une huile diélectrique.

17. Isolateur selon la revendication 16, dans lequel ladite huile a une viscosité de sensiblement 0,5 centi stokes.

18. Isolateur selon la revendication 1, comprenant en outre un tube d'égalisation de pression (152) emboîté dans la membrane (126) et s'étendant sensiblement d'une des extrémités opposées à l'autre des extrémités opposées de la membrane (126) de manière à fournir une communication du fluide entre les extrémités opposées de la membrane (126).

19. Isolateur selon la revendication 18, dans lequel l'élément diélectrique (114, 124) a un noyau, et dans lequel le tube d'égalisation de pression (152) passe le long du noyau.

20. Isolateur selon la revendication 1, dans lequel l'élément flexible diélectrique (114, 124) remplit sensiblement la membrane (126).

21. Procédé pour isoler électriquement un conducteur de ligne électrique sous tension (106) ou un fil statique (106) d'une ligne de traction (104) **caractérisé par** l'utilisation de l'isolateur électrique (100) selon la revendication 4, dans lequel les coupleurs (112) aux extrémités opposées de la membrane (126) et de l'élément diélectrique (114, 124) sont des premier et deuxième coupleurs (112), le procédé comprenant le couplage du premier coupleur (112) à une extrémité du conducteur de ligne électrique (106) ou du fil statique (106) et le couplage du deuxième coupleur (112) à une extrémité de la ligne de traction (104).
